Europäisches Patentamt

European Patent Office

Office européen des brevets

(11) Veröffentlichungsnummer: **0 470 473 A1**

# EUROPÄISCHE PATENTANMELDUNG

(21) Anmeldenummer: **91112713.2**

(22) Anmeldetag: **29.07.91**

(51) Int. Cl.5: **G01N 27/416**

(30) Priorität: **10.08.90 DE 4025437**

(43) Veröffentlichungstag der Anmeldung:
**12.02.92 Patentblatt 92/07**

(84) Benannte Vertragsstaaten:
**DE FR GB IT NL SE**

(71) Anmelder: **SIEMENS AKTIENGESELLSCHAFT**
**Wittelsbacherplatz 2**
**W-8000 München 2(DE)**

(72) Erfinder: **Preidel, Walter, Dr.**
**Eskilstunastrasse 14**
**W-8520 Erlangen(DE)**

(54) **Gassensor.**

(57) Ein Gassensor zur Messung des Sauerstoffpartialdrucks, der einen geringen Stromverbrauch aufweist und eine hohe Standzeit besitzt, weist folgende Merkmale auf:
- eine Sensorelektrode aus elektrokatalytisch inaktivem Kohlenstoff
- eine Gegenelektrode
- eine Bezugselektrode
- eine vor der Sensorelektrode angeordnete sauerstoffdurchlässige Membran und
- eine elektrolytische Verbindung zwischen Gegen- bzw. Bezugselektrode und Sensorelektrode.

EP 0 470 473 A1

Die Erfindung betrifft einen Gassensor zur Messung des Sauerstoffpartialdrucks.

Die Messung des Sauerstoffpartialdrucks ist ein wichtiges analytisches Problem. Insbesondere in der medizinischen Technik ist eine rasche und genaue Ermittlung des Sauerstoffwertes notwendig. So erfordert die Bestimmung des Sauerstoffpartialdrucks im Atemgas von Patienten eine Genauigkeit von ca. 5 Torr, und zwar im Bereich zwischen 0 und 800 Torr; die Drift des Signals sollte dabei im Verlauf von einigen Stunden einen Wert von 5 Torr nicht überschreiten. Die bislang in der Medizin verwendeten Sauerstoffsensoren genügen diesen Anforderungen aber bei weitem nicht. Dies gilt auch für Sensoren zur Messung des Sauerstoffpartialdrucks im Gasraum, die für die Biotechnologie und die allgemeine Analytik interessant sind. Auch bei derartigen Sensoren beträgt die Dauer der Messung einige Stunden.

Für die Sauerstoffmessung im Bereich der Raumtemperatur wird im allgemeinen der Sauerstoffsensor nach Clark eingesetzt (siehe dazu: US-PS 2 913 386, 3 260 656 und 4 076 596); bei hohen Temperaturen werden Oxidsensoren verwendet, beispielsweise $ZrO_2$. In der medizinischen Technik dient derzeit in Beatmungsgeräten zur Überwachung der Funktion ebenfalls der Clark-Sensor; in Blutgasanalysatoren wird dieses Sensorprinzip überlicherweise ebenfalls eingesetzt. Von Nachteil ist, daß die bekannten Sensoren einen relativ hohen Stromverbrauch haben, und daß die Elektroden und der Elektrolyt eine geringe Standzeit aufweisen.

Aufgabe der Erfindung ist es, einen Gassensor anzugeben, der sowohl relativ schnell anspricht und in der Lage ist, Änderungen des Sauerstoffpartialdrucks exakt zu messen, als auch einen geringen Stromverbrauch aufweist und eine hohe Standzeit besitzt.

Dies wird erfindungsgemäß durch einen Sensor mit folgenden Merkmalen erreicht:

- eine Sensorelektrode aus elektrokatalytisch inaktivem Kohlenstoff
- eine Gegenelektrode
- eine Bezugselektrode
- eine vor der Sensorelektrode angeordnete sauerstoffdurchlässige Membran und
- eine elektrolytische Verbindung zwischen Gegen- bzw. Bezugselektrode und Sensorelektrode.

Die sauerstoffdurchlässige Membran des erfindungsgemäßen Gassensors kann hydrophil sein und besteht dabei vorzugsweise aus Celluloseacetat oder perfluorsulfoniertem Polytetrafluorethylen, die mit Wasser gequollen sind. Als hydrophile Membran kann beispielsweise aber auch eine mit einem Thixotropiermittel, wie Siliciumdioxid, versehene Elektrolytschicht dienen. Die Dicke der hydrophilen Membran beträgt im allgemeinen 10 bis 100 μm.

Vorteilhaft kann die sauerstoffdurchlässige Membran auch hydrophob sein. Sie besteht dabei vorzugsweise aus Polytetrafluorethylen, als Membranmaterial kommt hierbei aber auch Polyethylen in Betracht. Die Dicke der hydrophoben Membran beträgt im allgemeinen 1 bis 20 μm. Bei hydrophoben Membranen ist es aber erforderlich, daß zwischen der Membran und der Sensorelektrode eine elektrolytisch leitende Schicht angeordnet ist. Eine derartige (Elektrolyt-)Schicht liegt vorzugsweise in Form einer wäßrigen Kaliumchlorid- oder Calciumchloridlösung vor. Als Elektrolytschicht kann beispielsweise aber auch eine mit Wasser gequollene Membran aus perfluorsulfoniertem Polytetrafluorethylen dienen. Die Anordnung aus Elektrolytschicht und hydrophober Membran hat den Vorteil einer höheren Langzeitstabilität, da der Wasseraustrag gering ist. Infolge der insgesamt dickeren Schicht (vor der Sensorelektrode) ist die Ansprechzeit des Sensors aber etwas höher.

Beim Gassensor nach der Erfindung dient als Material für die Sensorelektrode vorteilhaft Glaskohlenstoff, Pyrographit, gesputteter Kohlenstoff, gesputteter Graphit und amorpher wasserstoffhaltiger Kohlenstoff (a-C:H); vorzugsweise wird dabei Glaskohlenstoff eingesetzt, und zwar in nicht-aktivierter Form, d.h. es wird eine sogenannte glatte Glaskohlenstoffelektrode verwendet. Die Gegenelektrode besteht vorteilhaft aus Platin oder aktiviertem Glaskohlenstoff. Die Bezugselektrode ist vorzugsweise eine Ag/AgCl-Elektrode. Gegen- und Bezugselektrode müssen mit der Sensorelektrode elektrolytisch verbunden sein; dies erfolgt insbesondere durch ein wäßriges Medium, d.h. durch eine ionenleitende Verbindung. Vorteilhaft können Gegen- und Bezugselektrode eine funktionelle Einheit bilden. Dazu dient dann vorzugsweise eine relativ große Gegenelektrode aus aktiviertem Glaskohlenstoff oder aus Silber/Silberchlorid, die gleichzeitig als Bezugselektrode fungiert.

Eine bevorzugte Ausführungsform des erfindungsgemäßen Gassensors ist ein scheibenförmiger Sensor. Dazu werden in eine beispielsweise aus Polysulfon bestehende Scheibe - in entsprechende Aussparungen - zentral eine scheibenförmige Sensorelektrode und konzentrisch dazu eine ringförmige Bezugselektrode und eine ringförmige Gegenelektrode eingeklebt. Darauf wird dann eine hydrophile Membran bzw. eine Elektrolytschicht aufgebracht, die sowohl zur Abdeckung der Sensorelektrode als auch dazu dient, die Gegen- und die Bezugselektrode mit der Sensorelektrode elektrolytisch zu verbinden.

Dem erfindungsgemäßen Gassensor wird im allgemeinen ein Potentialprofil aufgeprägt (siehe dazu beispielsweise EP-OS 0 170 998). Im einfachsten Fall besteht das Potentialprofil aus zwei Potentialstufen, beispielsweise -1000 mV/20 ms und 0 mV/1980 ms. Innerhalb eines Zeitraumes von 15 bis 20 ms wird dann der Strom integriert; das Integral des Stromes ist ein Maß für die Sauerstoffkonzentration. Das Impulsprogramm kann auch aus drei Potentialstufen zusammengesetzt sein, beispielsweise -800 mV/20 ms, -1000 mV/20 ms und 0 mV/1960 ms. Der Strom wird dabei während der ersten beiden Potentialstufen gemessen und das Integral jeweils zwischen 15 und 20 ms gebildet; die Differenz der Integrale ist dabei eine Funktion der Sauerstoffkonzentration. Dieses Verfahren ist sowohl genauer als auch einfacher zu kalibrieren.

Beim Verfahren mit drei Potentialstufen beträgt die zeitliche Länge der Meßimpulse im allgemeinen jeweils zwischen 10 und 50 ms; die Integration des Stromes fängt im allgemeinen etwa 5 bis 30 ms nach dem Beginn des Impulses an und dauert jeweils zwischen 5 und 10 ms. Eine Messung der Elektrodenkapazität vor der Sauerstoffmessung ermöglicht es, das ermittelte Integral (Sauerstoffwert) auf die jeweilige Sensorelektrode (individuelle Eigenschaften, Fläche, Aktivität) zu beziehen. Insbesondere im Fall der Verwendung eines Elektrolytfilms auf der Oberfläche der Sensorelektrode ist die Messung der Impedanz zwischen Sensor- und Gegenelektrode zur Kontrolle des Elektrolytwiderstandes sinnvoll; ein Austrocknen ist damit leicht feststellbar.

Der Potentialbereich des ersten Meßimpulses liegt beim genannten Verfahren im allgemeinen zwischen -0,5 und -1,2 V, bezogen auf eine Ag/AgCl-Bezugselektrode, vorzugsweise liegt er zwischen -0,75 und -1,15 V. Der Potentialbereich des zweiten Meßimpulses liegt im allgemeinen zwischen -0,5 und -1,3 V, vorzugsweise zwischen -0,85 und -1,25 V. Die dritte Potentialstufe liegt etwa bei 0 V. Zwischen den beiden Meßpotentialen besteht eine Potentialdifferenz von > 50 mV.

Die Periodendauer des Impulsprogramms richtet sich nach der kürzesten Ansprechzeit. Dies bedeutet, daß die Periodendauer kürzer als die Ansprechzeit sein sollte. Eine noch geringere Ansprechzeit läßt sich durch eine Verminderung des Widerstandes zur Umladung der Doppelschichtkapazität erreichen. Konstruktiv kann das in der Weise realisiert werden, daß die Elektroden in geringem Abstand voneinander angeordnet werden, beispielsweise in Form von Mäandern (auf einem Siliciumwafer).

**Patentansprüche**

1. Gassensor zur Messung des Sauerstoffpartialdrucks, **gekennzeichnet** durch
   - eine Sensorelektrode aus elektrokatalytisch inaktivem Kohlenstoff

- eine Gegenelektrode
- eine Bezugselektrode
- eine vor der Sensorelektrode angeordnete sauerstoffdurchlässige Membran und
- eine elektrolytische Verbindung zwischen Gegen- bzw. Bezugselektrode und Sensorelektrode.

2. Gassensor nach Anspruch 1, **dadurch gekennzeichnet,** daß die Membran hydrophil ist.

3. Gassensor nach Anspruch 2, **dadurch gekennzeichnet,** daß die Membran aus Celluloseacetat oder perfluorsulfoniertem Polytetrafluorethylen besteht.

4. Gassensor nach Anspruch 1, **dadurch gekennzeichnet,** daß die Membran hydrophob ist, und daß zwischen der Membran und der Sensorelektrode eine elektrolytisch leitende Schicht angeordnet ist.

5. Gassensor nach Anspruch 4, **dadurch gekennzeichnet,** daß die Membran aus Polytetrafluorethylen besteht.

6. Gassensor nach Anspruch 4 oder 5, **dadurch gekennzeichnet,** daß die elektrolytisch leitende Schicht eine wäßrige Kaliumchlorid- oder Calciumchloridlösung ist.

7. Gassensor nach einem der Ansprüche 1 bis 6, **dadurch gekennzeichnet,** daß die Sensorelektrode aus Glaskohlenstoff, Pyrographit, gesputtertem Kohlenstoff, gesputtertem Graphit oder amorphem wasserstoffhaltigem Kohlenstoff besteht.

8. Gassensor nach einem oder mehreren der Ansprüche 1 bis 7, **dadurch gekennzeichnet,** daß die Gegenelektrode aus Platin oder aktiviertem Glaskohlenstoff besteht.

9. Gassensor nach einem oder mehreren der Ansprüche 1 bis 8, **dadurch gekennzeichnet,** daß die Bezugselektrode eine Ag/AgCl-Elektrode ist.

10. Gassensor nach einem oder mehreren der Ansprüche 1 bis 9, **dadurch gekennzeichnet,** daß Gegen- und Bezugselektrode eine funktionelle Einheit bilden.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | PATENT ABSTRACTS OF JAPAN, Band 12, Nr. 468 (P-797)[3315], 8. Dezember 1988; & JP-A-63 187 149 (TERUMO CORP.) 02-08-1988 * Gesamtes Dokument * — — — | 1,9 | G 01 N 27/416 |
| A | EP-A-0 235 016 (TERUMO) * Zusammenfassung; Seite 3, Zeilen 1-4; Ansprüche 1,2 * — — — | 1,7 | |
| A | EP-A-0 097 554 (BENDIX) * Zusammenfassung; Seite 6, Zeilen 23-28; Ansprüche 1,5 * — — — | 1-3,6 | |
| A | GB-A-1 226 610 (NATIONAL RESEARCH) * Seite 1, Zeilen 84-89; Anspruch 1 * — — — | 1,3 | |
| A | SENSORS AND ACTUATORS, Band 19, Nr. 1, 1. August 1989, Seiten 33-40; H.-Q. YAN et al.: "Solid polymer electrolyte-based electrochemical oxygen sensor" * Zusammenfassung * — — — | 1,4 | |
| A | GB-A-2 218 525 (GIMAT) * Zusammenfassung; Anspruch 2 * — — — — — | 1,6 | **RECHERCHIERTE SACHGEBIETE (Int. Cl.5)** G 01 N |

Der vorliegende Recherchenbericht wurde für alle Patentansprüche erstellt

| Recherchenort | Abschlußdatum der Recherche | Prüfer |
|---|---|---|
| Den Haag | 28 Oktober 91 | KEMPF G.V. |